Europäisches Patentamt

European Patent Office

Office européen des brevets

(19)

(11) Veröffentlichungsnummer: **0 029 075**
**A1**

(12) # EUROPÄISCHE PATENTANMELDUNG

(21) Anmeldenummer: 79200761.9

(22) Anmeldetag: 13.12.79

(51) Int. Cl.³: **F 01 D 15/12**, **F 16 H 1/08**,
**F 02 C 7/32**

(30) Priorität: 14.11.79 CH 10148/79

(71) Anmelder: BBC Brown, Boveri & Cie.
(Aktiengesellschaft), CH-5401 Baden (CH)

(43) Veröffentlichungstag der Anmeldung: 27.05.81
Patentblatt 81/21

(84) Benannte Vertragsstaaten: AT BE CH DE FR GB IT LU
NL SE

(72) Erfinder: Zaba, Tadeusz, Dipl.-Ing., Trottenstrasse 21,
CH-5400 Ennetbaden/AG (CH)

(54) Gasturbine mit zusätzlichem Brenngasverdichter.

(57) Zum Ausgleich des durch einen bei einer Standard-Gasturbine angeordneten Brenngasverdichter (6) erzeugten zusätzlichen Axialschubes wird vorgeschlagen, zum Schubausgleich das Antriebszahnrad (11) des Getriebes (10), über welches der Brenngasverdichter (6) mit der Turbine in Drehverbindung steht, mit Druckkämmen (12, 12') zu versehen, wobei die schrägverzahnten Zahnräder (11, 13, 14) so ausgelegt sind, daß eine auf die Druckkämme (12, 12') einwirkende, aus dem Schub des Brenngasverdichters (6) resultierende Kraft um die Axialkomponente der Schrägverzahnung verringert ist.

- 1 -

## Gasturbine mit zusätzlichem Brenngasverdichter

Die vorliegende Erfindung betrifft eine Gasturbine mit einem zusätzlichen Brenngasverdichter und einem Getriebe, welches einmal über eine starre Kupplung und ein Axiallager mit der Gasturbine und zum anderen über eine weitere starre Kupplung mit dem Brenngasverdichter in Drehverbindung steht und weiterhin über eine Abtriebswelle einen Generator antreibt, und wobei die Getrieberäder eine Schrägverzahnung aufweisen.

Derartige Anlagen sind bekannt, wobei zwischen dem Getriebe und dem Brenngasverdichter eine besondere Kupplung, beispielsweise eine verschiebbare Klauenkupplung angeordnet wird, wodurch der Rest-Axialschub des Brenngasverdichters ausgeglichen werden kann, und wobei der Brenngasverdichter ein eigenes Kammlager zur Schubaufnahme aufweist. Der interne Axialschub wird weitgehend durch einen Schubausgleichskolben ausgeglichen (siehe "Stahl u. Eisen", 80 (1960), Heft 22, Seite 1544, Abb. 6).

Da beim Betrieb einer Gasturbine mit Brenngas, welches einen tieferen Heizwert aufweist als Erdgas, zur Erzielung

- 2 -

derselben Leistung eine Menge benötigt wird, die 10 bis 20 mal grösser als Erdgas ist, muss bei Anwendung einer Standard-Gasturbine ohne Aenderung der Turbinenbeschaufelung die Fördermenge des Luftverdichters entsprechend verringert werden. Durch eine solche Massnahme wird der Axialschub zur Turbine hin vergrössert, wodurch die Belastung des Axiallagers unzulässig erhöht wird.

Es ist daher Aufgabe der Erfindung, bei einer Standard-Gasturbine einen Schubausgleich zu schaffen, bei welchem ohne zusätzliche konstruktive Massnahmen der vom Brenngasverdichter erzeugte zusätzliche Axialschub ausgeglichen werden kann, ohne dass dieser auf die Turbinenwelle und das Axiallager überhaupt einwirkt.

Die vorgenannte Aufgabe wird erfindungsgemäss dadurch gelöst, dass als Schubausgleich das Antriebszahnrad des Getriebes mit Druckkämmen versehen ist, und dass die Schrägverzahnung der Zahnräder so ausgelegt ist, dass eine auf die Druckkämme einwirkende, aus dem Schub des Brenngasverdichters resultierende Kraft um die Axialkomponente der Schrägverzahnung verringert ist.

Durch die Verwendung eines mit Druckkämmen versehenen Antriebszahnrades kann der vom Gasverdichter resultierende Axialschub zur Entlastung des Axiallagers der Gasturbine herangezogen werden. Durch die Wahl des Zahnwinkels der Schrägverzahnung, zusammen mit den Druckkämmen wird die Schubkraft des Brenngasverdichters über das Getriebe auf die starre Kupplung zwischen dem Getriebe und der Gastur-

- 3 -

bine übertragen, ohne die Druckkämme zusätzlich zu belasten.

In der Zeichnung ist ein Ausführungsbeispiel des Erfindungsgegenstandes vereinfacht dargestellt.

Es zeigt:

Fig. 1 eine Gasturbinenanlage mit einem zusätzlichen Brenngasverdichter,

Fig. 2 das Getriebe nach Fig. 1 mit eingezeichneter Kräfteverteilung.

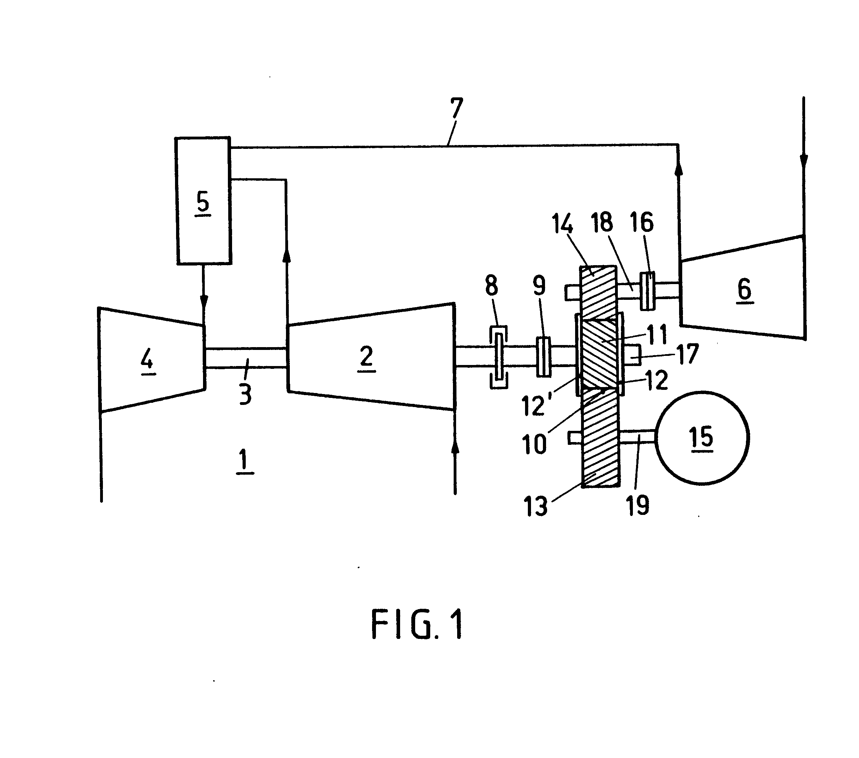

In der Fig. 1 ist mit 1 eine Gasturbine mit einem Verdichter 2 und einer auf einer gemeinsamen Welle 3 angeordneten Turbine 4, sowie einer Brennkammer 5 bezeichnet. Die Gasturbine 1 sei mit einem Brenngas mit tiefem Heizwert, beispielsweise mit Gichtgas , betrieben. Es ist hierzu ein zusätzlicher Brenngasverdichter 6 vorgesehen, von welchem das verdichtete Brenngas über eine Leitung 7 der Brennkammer 5 zugeführt und dort mit der im Verdichter 2 verdichteten Brennluft vermischt und gezündet wird. Die Welle 3 der Gasturbine 1 ist verdichterseitig in einem Axiallager 8 gelagert und über eine starre Kupplung 9 mit einer Getriebewelle 17 eines Getriebes 10 zusammengekuppelt. Ein Antriebszahnrad 11 ist mit Druckkämmen 12 versehen. Ueber Abtriebszahnräder 13, 14 ist einmal über eine erste Abtriebswelle 18 ein Generator 15 und zum anderen über eine zweite Abtriebswelle 19 und eine zweite starre Kupplung 16 der Brenngasverdichter 6 angetrieben.

- 4 -

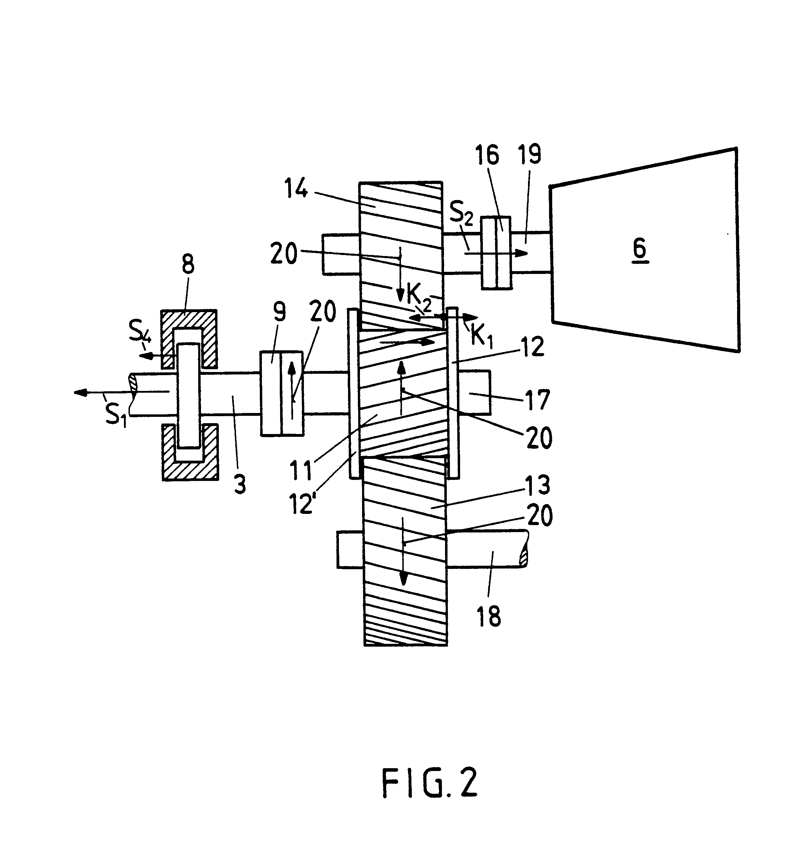

In der in der Fig. 2 gezeigten Kräfteverteilung bedeuten $S_1$ der Axialschub der Welle 3 der Gasturbine 1, $S_2$ der Axialschub des Brenngasverdichters 6, $S_4$ der auf das Axiallager 8 einwirkende Schub, wobei $S_4 = S_1 - S_2$ ist. Würde für die Getriebezahnräder 11, 13, 14 eine Geradverzahnung mit einem Verzahnungswinkel 0 gewählt, so würde die auf den Druckkamm 12 wirkende Kraft $K_1$ gleich gross sein wie die Schubkraft $S_2$. Die Pfeile 20 bezeichnen die Drehrichtungen des Antriebszahnrades 11, der Abtriebszahnräder 13, 14, sowie der Welle 3 mit der starren Kupplung 9.

Durch Auslegung der Getriebezahnräder mit Schrägverzahnung entsteht während der Kraftübertragung eine Axialkomponente $K_2$. Vorteilhafterweise wird der Verzahnungswinkel der Getriebezahnräder 11, 13, 14 so gewählt, dass diese Axialkomponente $K_2$ der Kraft $K_1$ entgegensteht. Die auf die Druckkämme 12, 12' einwirkende Kraft $K_1$ beträgt somit:

$$K_1 = S_2 - K_2,$$

und da $K_1 <$ als $S_2$ ist, wird auch die Belastung und Abnützung der Druckkämme 12, 12' geringer.

Durch die erfindungsgemässe Ausbildung des Antriebszahnrades 11 mit Druckkämmen 12, 12' sowie die entsprechende Wahl des Verzahnungswinkels für die Schrägverzahnung der Getriebezahnräder 11, 13, 14 kann der Axialschub des Brenngasverdichters 6 ohne besondere weitere konstruktive Massnahmen zur Entlastung des Axiallagers 8 herangezogen werden. Die Wahl des richtigen Verzahnungswinkels ermöglicht weiterhin auf einfache Weise die Verringerung der duch die Schubübertragung auf die Druckkämme 12, 12' einwirkenden Kräfte.

## B e z e i c h n u n g s l i s t e

| | | |
|---|---|---|
| 1 | = | Gasturbine |
| 2 | = | Verdichter |
| 3 | = | Welle |
| 4 | = | Turbine |
| 5 | = | Brennkammer |
| 6 | = | Brenngasverdichter |
| 7 | = | Leitung |
| 8 | = | Axiallager |
| 9 | = | starre Kupplung |
| 10 | = | Getriebe |
| 11 | = | Antriebszahnrad |
| 12 }<br>12' } | = | Druckkämme |
| 13 }<br>14 } | = | Abtriebszahnräder |
| 15 | = | Generator |
| 16 | = | zweite starre Kupplung |
| 17 | = | Getriebewelle |
| 18 | = | erste Abtriebswelle |
| 19 | = | zweite Abtriebswelle |
| 20 | = | Drehrichtungspfeile |

- 1 -

Patentanspruch

Gasturbine mit einem zusätzlichen Brenngasverdichter und einem Getriebe, welches einmal über eine starre Kupplung und ein Axiallager mit der Gasturbine und zum anderen über eine weitere starre Kupplung mit dem Brenngasverdichter in Drehverbindung steht und weiterhin über eine Abtriebswelle einen Generator antreibt, und wobei die Getrieberäder eine Schrägverzahnung aufweisen, dadurch gekennzeichnet, dass zum Schubausgleich das Antriebszahnrad (11) des Getriebes (10) mit Druckkämmen (12, 12') versehen ist, und dass die Schrägverzahnung der Zahnräder (11, 13, 14) so ausgelegt ist, dass eine auf die Druckkämme (12, 12') einwirkende, aus dem Schub des Brenngasverdichters (6) resultierende Kraft um die Axialkomponente der Schrägverzahnung verringert ist.

FIG. 1

0029075

0029075

FIG.2

137/79

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | STAHL UND EISEN, Band 80, Nr. 22, 27. Oktober 1960 H. PFENNINGER "Abhitzeverwertung und Kombination der Gasturbinen mit Dampfkraftwerken in der Hüttenindustrie" Seiten 1540 bis 1549 * Seite 1544, Fig. 6 * -- | 1 |
| | DE - C - 341 894 (AKTIENGESELLSCHAFT BROWN BOVERI & CIE) * Seite 1, Zeilen 30 bis 42; Fig., Positionen C,G und D,H * -- | 1 |
| | DE - C - 25 120 (K.E. BUHLER) * Seite 1, Spalte 1, Zeilen 24 bis 26; Fig. 1 bis 3, Position g * -- | 1 |
| | GB - A - 1 043 845 (G. NIEMANN) * Seite 3, Zeilen 19 bis 39; Fig. 1, Positionen 20, 24 und 23, 25 * -- ./.. | 1 |

**KLASSIFIKATION DER ANMELDUNG (Int. Cl.³)**

F 01 D 15/12
F 16 H  1/08
F 02 C  7/32

**RECHERCHIERTE SACHGEBIETE (Int. Cl.³)**

F 01 D  3/00
F 01 D 15/12
F 02 C  7/32
F 16 H  1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 12-02-1981 | STÖCKLE |

EPA form 1503.1  06.78

Europäisches
Patentamt

**EUROPÄISCHER RECHERCHENBERICHT**

0029075
Nummer der Anmeldung
EP 79 20 0761.9
- Seite 2 -

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | F. SASS et al. "Dubbels Taschenbuch für den Maschinenbau" 12. Auflage, Band 1, 1961, SPRINGER-VERLAG, Berlin, Göttingen, Heidelberg, Seiten 744 und 745 * Seite 745, Fig. 153, Positionen a, b * -- | 1 | |
| A | F. SASS et al. "Dubbels Taschenbuch für den Maschinenbau" 12. Auflage, Band 1, 1961, SPRINGER -VERLAG, Berlin, Göttingen, Heidelberg, Seiten 730 und 731 * Seite 731, letzter Absatz * -- | 1 | RECHERCHIERTE SACHGEBIETE (Int. Cl.3) |
| A | DE - A - 1 815 039 (MESSERSCHMITT-BÖLKOW-BLOHM GMBH) * Anspruch 1 * -- | 1 | |
| A | DE - C - 541 079 (AKTIENGESELLSCHAFT BROWN, BOVERI & CIE) * Anspruch 1 * -- | 1 | |
| A | DE - C - 295 019 (K. RÖDER) * Anspruch 1 * -- ./.. | 1 | |

| | **EINSCHLÄGIGE DOKUMENTE** | | **KLASSIFIKATION DER ANMELDUNG (Int.Cl.3)** |
|---|---|---|---|
| **Kategorie** | **Kennzeichnung des Dokuments mit Angabe, soweit erforderlich, der maßgeblichen Teile** | **betrifft Anspruch** | |
| A | FR - A - 1 465 384 (CIE DES ATELIERS ET FORGES DE LA LOIRE) <br> * ganzes Dokument * <br> -- | 1 | |
| A | US - A - 2 674 898 (E.H. MUDERSBACH) <br> * ganzes Dokument * <br> ---- | 1 | |
| | | | **RECHERCHIERTE SACHGEBIETE (Int. Cl.3)** |